# EUROPEAN PATENT SPECIFICATION

(11) **EP 3 506 852 B1**
(45) Date of publication and mention of the grant of the patent: **17.03.2021**
(21) Application number: 17777975.8
(22) Date of filing: 24.08.2017
(51) Int. Cl.: A61C 8/00

(54) **DENTAL IMPLANT COVER**
ABDECKUNG FÜR ZAHNIMPLANTAT
COUVERCLE D'IMPLANT DENTAIRE

(30) Priority: 31.08.2016 US 201662381741 P
(43) Date of publication of application: 10.07.2019
(73) Proprietor: Boiangiu, Andy, 58280 Holon (IL)
(72) Inventor: Boiangiu, Andy, 58280 Holon (IL)
(74) Representative: Graham Watt & Co LLP
(86) International application number: PCT/IL2017/050948
(87) International publication number: WO 2018/042420

(56) References cited:
- US-A1- 2004 209 226
- US-A1- 2014 272 792
- US-A1- 2016 008 105
- US-A1- 2016 015 486

## Description

### TECHNICAL FIELD

The present invention relates generally to the field of dental implants and in particular to a dental implant cover.

### BACKGROUND

In order to install dental crowns, endosseous implant may be used to anchor an abutment and a crown is installed on the abutment. Additionally, endosseous implants may be used to anchor dentures to support multiple prosthetic teeth since dentures do not adhere well to the patient's gingiva, thereby causing significant discomfort and malfunction of the denture as well as embarrassment to the patient when the denture slips out of the patient's mouth. A denture that fits over implants, or shortened natural teeth if preserved, is called an overdenture.

Endosseous dental implants are typically threaded or press-fit into pre-drilled bores in the mandible or maxilla and act as a tooth-root replacement. The endosseous dental implants are inserted until the last thread. Unfortunately, gingiva recession around the implant may result in threads being exposed. Bacteria can accumulate around, and on, the endosseous implant, including between an implant superstructure and an abutment for the dental crown in two stage implants, particularly due to gingiva recession. The accumulating bacteria can cause peri-implantitis, which is a destructive inflammatory process affecting the soft and hard tissues surrounding the implant. Once peri-implantitis begins it is very difficult to control, since the patient may find it impossible to completely clean the exposed implant threads and/or structured surface of the implant.

US2014/0272792 A1 discloses a conversion abutment that cements onto one-piece dental implants having an internal blind recess to receive the head of the implant. The conversion abutments exhibit cement release holes extending from the blind recess permitting excess cement to escape when the conversion abutment is placed over the head of the implant.

There is thus a long felt need for a device and method which can arrest the progression of peri-implantitis.

### SUMMARY

Accordingly, it is a principal object to overcome at least some of the disadvantages of prior art. This is accomplished by the invention as defined in claim 1.

In one embodiment, the filler material comprises implant cement. In another embodiment, the elongated member is dimensioned so as to extend from the dental implant to within 0 to 3 mm of the patient bone. In yet another embodiment, the elongated member exhibits a hole at one end arranged for receipt of an abutment connection.

Also disclosed is a method of arresting the progression of per-implantitis comprising: selecting a dental implant cover for an affected implant, the dental implant cover comprising an elongated member and a filler material deposited therein, the dental implant cover selected to exhibit an interior dimension so as to fit tightly over the affected implant, and a length such that a first end of the elongated member covers an end of the dental implant and the second end of the elongated member extends towards the patient bone; recessing a gingival tissue around the affected implant; covering the dental implant with the selected dental implant cover; and releasing the gingival tissue so as to set against the selected dental implant cover.

In one embodiment, the filler material comprises implant cement. In another embodiment, the elongated member is dimensioned so as to extend from the dental implant to within 0 to 3 mm of the patient bone. In yet another embodiment, the elongated member exhibits a hole at one end arranged for receipt of an abutment connection.

Additional features and advantages will become apparent from the following drawings and description.

### BRIEF DESCRIPTION OF THE DRAWINGS

For a better understanding of the invention and to show how the same may be carried into effect, reference will now be made, purely by way of example, to the accompanying drawings in which like numerals designate corresponding elements or sections throughout.

With specific reference now to the drawings in detail, it is stressed that the particulars shown are by way of example and for purposes of illustrative discussion of the preferred embodiments of the present invention only, and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice. In the accompanying drawings:
FIGs. 1A - 1C illustrate various high level views of a first embodiment of an implant cover arranged to be fitted over a dental implant, according to certain embodiments;
FIG. 2 illustrate a high level view of an implant cover arranged to be fitted over a dental implant having an abutment secured thereto, according to certain embodiments;
FIGs. 3A - 3C illustrate various stages in a method of arresting the progression of peri-implantitis; and
FIG. 4 illustrates a high level flow chart of a method of arresting the progression of peri-implantitis, according to certain embodiments.

### DETAILED DESCRIPTION OF THE PREFERRED EMBODIMENTS

Before explaining at least one embodiment of the invention in detail, it is to be understood that the invention is not limited in its application to the details of construction and the arrangement of the components set forth in the following description or illustrated in the drawings. The invention is applicable to other embodiments or of being practiced or carried out in various ways.

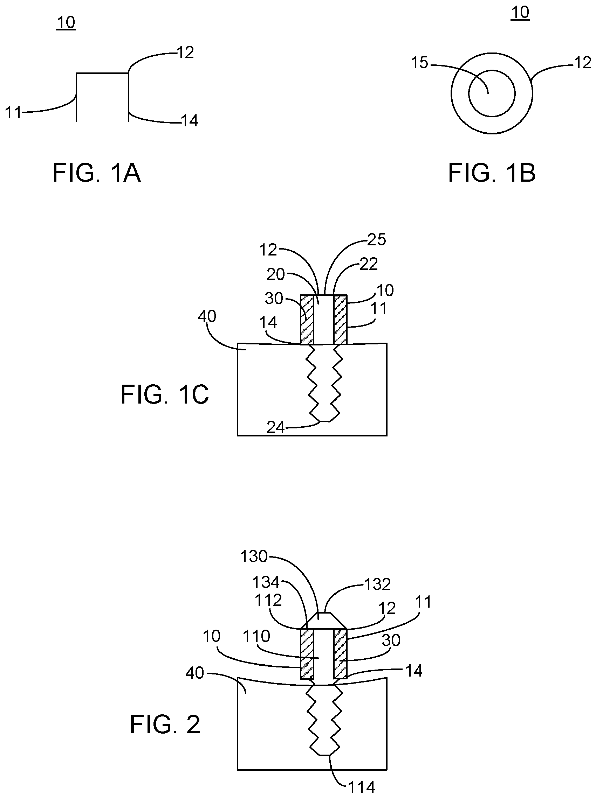

FIGs. 1A - 1C illustrate various high level views of an implant cover 10, arranged to be fitted over a dental implant 20 so as to arrest the progression of peri-implantitis. Dental implant 20 has been previously implanted into a patient bone, and the implant area is presenting per-implantitis. Particularly, FIG. 1A illustrates a high level side view of implant cover 10, FIG. 1B illustrates a high level top view of implant cover 10 and FIG. 1C illustrates a high level side view of implant cover 10 fitted over dental implant 20, FIGs. 1A - 1C being described together. Implant cover 10 comprises: an elongated member 11 which extends from a first end 12 to a second end 14; and a filler material 30. In one embodiment, elongated member 11 is made of Zirconia. In another embodiment, elongated member 11 exhibits a generally cylindrical shape. Dental implant 20 extends from a first end 22 to a second end 24. In one embodiment, dental implant 20 is threaded from first end 22 partially along the length thereof. Elongated member 11 exhibits a smooth inside bore from first end 12 to second end 14. A hole 15 in first end 12 of elongated member 11 is dimensioned so as to allow for connection of a dental abutment through hole 15 into a receptacle in dental implant 20. Filler material 30 is deposited between elongated member 11 and dental implant 20. In one embodiment, filler material 30 comprises implant cement. The external surface of elongated member 11 is preferably smooth with no texturing. The inner diameter of elongated member 11 is selected to be larger than the maximum diameter of dental implant 20, while still maintaining a tight fit. A typical top diameter of dental implant 20, i.e. the side associated with first end 12, is 3.75 mm, with the implant narrowing in the direction of the respective bone.

In one embodiment, elongated member 11 extends a predetermined length such that second end 14 extends towards the bone where dental implant 20 is implanted into. Particularly, the length of elongated member 11 is shorter than the length of dental implant 20. Elongated member 11 is selected so as to extend from the top of dental implant 20 until below the gingiva line associated with the respective dental implant 20, preferably to within 0 to 3 mm of the bone. Optionally, the length of elongated member 11, i.e. the distance between first end 12 and second end 14, is 2 - 10 millimeters.

The first end 22 of dental implant 20 exhibits a hole 25 as a receptacle for an abutment connection. In such an embodiment, hole 15 is positioned aligned with hole 25 of dental implant 20 such that implant cover 10 does not cover hole 25. Optionally, insertion of the abutment connection through hole 15 for connection with hole 25 assists in securing implant cover 10 in relation to dental implant 20. In one embodiment, the extending connection member of the dental abutment is screwed into a threaded receptacle of hole 25, which extends from first end 22 of dental implant 20, the connection member extending through hole 15 of implant cover 10. In such an embodiment hole 15 is preferably dimensioned to exceed the external diameter of the connection member, with a minimal amount of clearance, so that securing of the dental abutment cooperates to secure the inner face of first end 12 to first end 22 of dental implant 20.

Preferably, elongated member 11 is not tapered. If elongated member 11 were tapered, this would prevent a proper fit over a tapered dental implant 20.

Dental implant 20 is inserted into the bone 40 of a patient, as is well known in the art of restorative dentistry. In the event of peri-implantitis, a practitioner will select an implant cover 10 sized and dimensioned to tightly fit over dental implant 20 so as to protect the area above bone 40 and around dental implant 20 such that bacteria does not accumulate, thereby arresting any further progression of peri-implantitis.

FIG. 2 illustrates a high level view of implant cover 10, arranged to be fitted over a dental implant 110 having a dental abutment 130 secured thereto. Implant cover 10 comprises: elongated member 11 which extends from first end 12 to second end 14; and filler material 30. In one embodiment, elongated member 11 is made of Zirconia. Elongated member 11 extends from first end 12 to second end 14. Dental implant 110 extends from a first end 112 to a second end 114. In one embodiment, dental implant 110 is threaded from first end 112 partially along the length thereof and elongated member 11 exhibits a smooth inside bore from first end 12 to second end 14. Dental implant 110 exhibits abutment 130 which extends proximally from first end 112. Filler material 30 is deposited between elongated member 11 and dental implant 110. Dental abutment 130 is secured to first end 112 of dental implant 110 and juxtaposed with first end 102 of implant cover 100. Particularly, dental abutment 130 exhibits a first end 132 and a second end 134, opposing first end 132. A dental crown, or other dental device (not shown), is arranged to be secured to first end 132 of dental abutment 130, and second end 132 of dental abutment 130 is secured to first end 112 of dental implant 110, optionally within a hole therein.

Dental implant 110 differs from dental implant 10 in that dental abutment 130 is integral within dental implant 110, whereas in dental implant 10, the dental abutment may be easily removed. Implant cover 10 must be selected in accordance with the target dental implant, and thus in the case of dental implant 110, hole 15 must be selected with a diameter and placement configured to allow for the passage of dental abutment 130 there-through and to allow for first end 12 of implant cover 10 to be seated on first end 112 of dental implant 110.

Elongated member 11 extends a predetermined length such that second end 14 thereof extends towards the bone where dental implant 110 is implanted into. Particularly, the length of elongated member 11 is shorter than the length of dental implant 110. Optionally, the length of elongated member 11, i.e. the distance between first end 12 and second end 14, is 2 - 10 millimeters. In one embodiment, second end 14 of elongated member 11 extends to a distance of 0 millimeters from the bone where dental implant 110 is implanted into. Further preferably, elongated member 11 extends to under the gingiva line (not shown) associated with dental implant 110. In another embodiment, second end 14 reaches the bone where dental implant 110 is implanted into. As indicated above, dental abutment 130 is secured to first end 112 of dental implant 110 and juxtaposed with first end 102 of implant cover 100. Particularly, dental abutment 130 exhibits a first end 132 and a second end 134, opposing first end 132. A dental crown, or other dental device (not shown), is arranged to be secured to first end 132 of dental abutment 130, and second end 132 of dental abutment 130 is secured to first end 112 of dental implant 110.

When dental implant 110 is inserted into the bone 40 of a patient, and per-implantitis is experienced, implant cover 100 is arranged to protect the area above bone 40 and around dental implant 110 such that bacteria does not accumulate, thereby arresting the spread of peri-implantitis. Advantageously, in certain cases, the gingival tissue may adhere to the implant cover thereby ensuring a block against peri-implantitis.

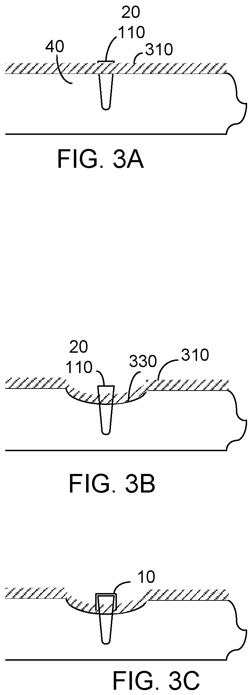

FIGs. 3A - 3C illustrate various stages in a method of arresting the progression of peri-implantitis utilizing implant cover 10. FIG. 3A illustrates dental implant 20, 110 inserted into patient bone 40, particularly the maxilla or mandible. Gingiva 310 is further illustrated. Patient bone 40 is illustrated as being in good condition, with no localized lesion. FIG. 3B illustrates the presentation of peri-implantitis associated with dental implant 20, 110, with localized lesion 330. Gingiva 310 has adapted itself to localized lesion 330. Left untreated, peri-implantitis will continue to advance until mobility of dental implant 20, 110 is experienced.

Fig. 3C illustrates implant cover 10 selected and placed over dental implant 20, 110 so as to arrest the progression of peri-implantitis. Implant cover 10 preferably exhibits an external surface which is smooth with no texturing so as not to present a location for adhering bacteria.

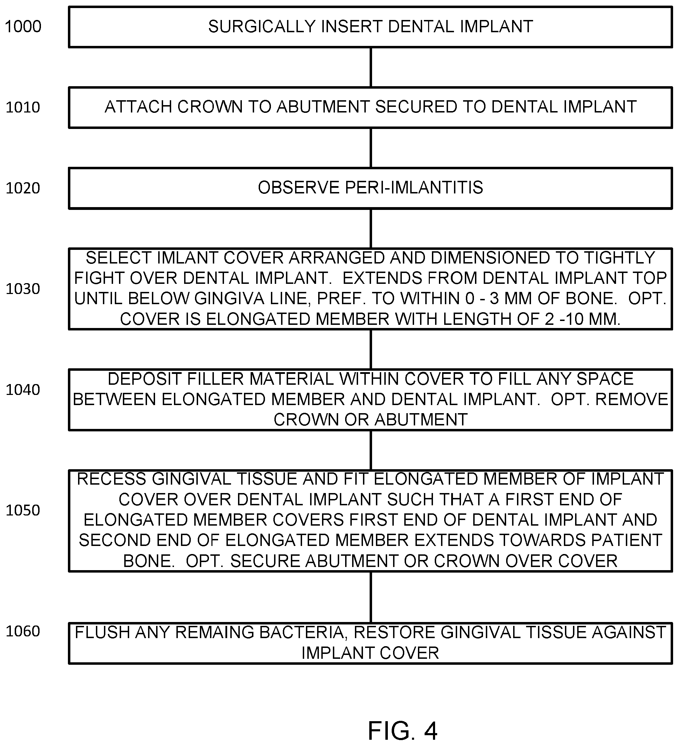

FIG. 4 illustrates a high level flow chart of a method of arresting the progression of peri-implantitis. In stage 1000, a dental implant is surgically placed within the patient bone, particularly the maxilla or mandible. In stage 1010, after successful osseointegration, a crown is placed over an abutment of the dental implant of stage 1000. In stage 1020, peri-implantitis is observed, and treatment is proposed.

In stage 1030, an implant cover is selected for the peri-implantitis affected implant of stage 1020, arranged and dimensioned to tightly fit over the peri-implantitis affected implant dental implant 20 so as to protect the area above the affected patient bone and around dental implant such that bacteria does not accumulate, thereby arresting any further progression of the observed peri-implantitis. The implant cover is selected so as to extend from the top of the dental implant until below the gingiva line associated with the respective dental implant, preferably to within 0 to 3 mm of the bone. Alternately, the second end of the elongated member reaches the patient bone. Optionally, the length of the implant cover is 2 - 10 millimeters. Alternately, as discussed in relation to implant 110, the hold of the implant cover is selected so as to allow for passage of the attached abutment.

Optionally, implant cover comprise an elongated member which is generally cylindrical shaped. The elongated member extends from a first end to a second end, the first end of the elongated member arranged to cover the end of the dental implant which extends away from the patient bone. The second end of the elongated member extends along the dental implant towards the patient bone such that the entire section of the dental implant which is outside of the patient bone is covered by the elongated member. Optionally, the first end of the elongated member exhibits a hole arranged to be lined up with a hole in the end of the dental implant.

In stage 1040, filler material is deposited within the elongated member so as to secure same to the target dental implant. Optionally, the filler material comprises implant cement. Optionally, the crown is removed from the peri-implantitis affected implant of stage 1020.

In stage 1050, the gingival tissue around the lesion is recessed, and the selected implant cover is secured over the implant. Optionally, an abutment is secured to the end of the dental implant which cooperates to secure the selected implant cover to the implant.

In stage 1060, any remaining bacteria is flushed, and the gingival tissue is restored securely against the installed implant cover of stage 1050.

It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable sub-combination. In the claims of this application and in the description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

Unless otherwise defined, all technical and scientific terms used herein have the same meanings as are commonly understood by one of ordinary skill in the art to which this invention belongs. Although methods similar or equivalent to those described herein can be used in the practice or testing of the present invention, suitable methods are described herein.

It will be appreciated by persons skilled in the art that the present invention is not limited to what has been particularly shown and described hereinabove. Rather the scope of the present invention is defined by the appended claims.

## Claims

1. A covered dental implant comprising:
a dental implant (20, 110) extending from a first end (22, 112), exhibiting a hole (25) as a receptacle for an abutment connection, to a second end (24, 114);
an elongated member (11) extending from a first end (12) to a second end (14); and
filler material (30) deposited between said elongated member and said dental implant,
wherein said elongated member (11) is fitted over said dental implant (20, 110) such that the first end of said elongated member covers the first end of said dental implant and the second end of said elongated member extends towards the second end of said dental implant, and
wherein said elongated member (11) exhibits a hole (15) in the first end of said elongated member (11) aligned with the hole (25) of the dental implant.

2. The covered dental implant according to claim 1, wherein said filler material comprises implant cement.

3. The covered dental implant according to claim 1, wherein a length of said elongated member is shorter than a length of said dental implant.

4. The covered dental implant according to claim 1, further comprising a dental abutment (130) exhibiting a first end (132) and a second end (134), said hole in the first end of said elongated member arranged for receipt of said dental abutment, such that the first end of said dental abutment extends out of said elongated member and the second end of said dental abutment is secured to the first end of said dental implant.

5. The covered dental implant according to claim 4, wherein said dental abutment extends proximally from the first end of said dental implant.

6. The covered dental implant according to claim 1, wherein the first end of said elongated member is seated on the first end of said dental implant.

7. The covered dental implant according to claim 1, wherein said elongated member is not tapered.

8. The covered dental implant according to claim 1, wherein an external surface of said elongated member is smooth.

## Patentansprüche

1. Verdecktes Zahnimplantat, umfassend:
ein Zahnimplantat (20, 110), das sich von einem ersten Ende (22, 112), das ein Loch (25) als Aufnahme für eine Abutment-Verbindung aufweist, zu einem zweiten Ende (24, 114) erstreckt;
ein längliches Element (11), das sich von einem ersten Ende (12) zu einem zweiten Ende (14) erstreckt; und
Füllmaterial (30), das zwischen dem länglichen Element und dem Zahnimplantat eingebracht ist, wobei das längliche Element (11) derart über das Zahnimplantat (20, 110) gepasst ist, dass das erste Ende des länglichen Elements das erste Ende des Zahnimplantats verdeckt und das zweite Ende des länglichen Elements sich in Richtung des zweiten Endes des Zahnimplantats erstreckt, und wobei das längliche Element (11) ein Loch (15) in dem ersten Ende des länglichen Elements (11) aufweist, das mit dem Loch (25) des Zahnimplantats fluchtet.

2. Verdecktes Zahnimplantat nach Anspruch 1, wobei das Füllmaterial Implantatzement umfasst.

3. Verdecktes Zahnimplantat nach Anspruch 1, wobei eine Länge des länglichen Elements kürzer ist als eine Länge des Zahnimplantats.

4. Verdecktes Zahnimplantat nach Anspruch 1, ferner umfassend ein Dental-Abutment (130), das ein erstes Ende (132) und ein zweites Ende (134) aufweist, wobei das Loch in dem ersten Ende des länglichen Elements zur Aufnahme des Dental-Abutments derart angeordnet ist, dass sich das erste Ende des Dental-Abutments von dem länglichen Element erstreckt und das zweite Ende des Dental-Abutments an dem ersten Ende des Zahnimplantats befestigt ist.

5. Verdecktes Zahnimplantat nach Anspruch 4, wobei sich das Dental-Abutment proximal von dem ersten Ende des Zahnimplantats erstreckt.

6. Verdecktes Zahnimplantat nach Anspruch 1, wobei das erste Ende des länglichen Elements auf dem ersten Ende des Zahnimplantats sitzt.

7. Verdecktes Zahnimplantat nach Anspruch 1, wobei das längliche Element nicht konisch ist.

8. Verdecktes Zahnimplantat nach Anspruch 1, wobei eine Außenfläche des länglichen Elements glatt ist.

## Revendications

1. Implant dentaire recouvert comprenant :
un implant dentaire (20, 110) s'étendant depuis une première extrémité (22, 112), présentant un trou (25) en tant que réceptacle servant à un raccordement de pilier, à une seconde extrémité (24, 114) ;
un élément allongé (11) s'étendant depuis une première extrémité (12) à une seconde extrémité (14) ; et
du matériau de remplissage (30) déposé entre ledit élément allongé et ledit implant dentaire,
dans lequel ledit élément allongé (11) est ajusté sur ledit implant dentaire (20, 110) de telle sorte que la première extrémité dudit élément allongé recouvre la première extrémité dudit implant dentaire et la seconde extrémité dudit élément allongé s'étend vers la seconde extrémité dudit implant dentaire et
dans lequel ledit élément allongé (11) présente un trou (15) dans la première extrémité dudit élément allongé (11) aligné avec le trou (25) de l'implant dentaire.

2. Implant dentaire recouvert selon la revendication 1, dans lequel ledit matériau de remplissage comprend du ciment d'implant.

3. Implant dentaire recouvert selon la revendication 1, dans lequel une longueur dudit élément allongé est plus courte qu'une longueur dudit implant dentaire.

4. Implant dentaire recouvert selon la revendication 1, comprenant en outre un pilier dentaire (130) présentant une première extrémité (132) et une seconde extrémité (134), ledit trou dans la première extrémité dudit élément allongé étant agencé pour recevoir ledit pilier dentaire, de telle sorte que la première extrémité dudit pilier dentaire s'étend hors dudit élément allongé et que la seconde extrémité dudit pilier dentaire est immobilisée sur la première extrémité dudit implant dentaire.

5. Implant dentaire recouvert selon la revendication 4, dans lequel ledit pilier dentaire s'étend de manière proximale depuis la première extrémité dudit implant dentaire.

6. Implant dentaire recouvert selon la revendication 1, dans lequel la première extrémité dudit élément allongé repose sur la première extrémité dudit implant dentaire.

7. Implant dentaire recouvert selon la revendication 1, dans lequel ledit élément allongé n'est pas conique.

8. Implant dentaire recouvert selon la revendication 1, dans lequel une surface externe dudit élément allongé est lisse.
